Europäisches Patentamt

European Patent Office

Office européen des brevets

(11) Publication number: **0 109 105**
**B1**

## (12) EUROPEAN PATENT SPECIFICATION

(45) Date of publication of patent specification: **24.06.87**

(21) Application number: **83201462.5**

(22) Date of filing: **13.10.83**

(51) Int. Cl.⁴: **B 65 B 9/14**

(54) Apparatus for spreading a tube made from flexible material.

(30) Priority: **08.11.82 NL 8204315**

(43) Date of publication of application:
**23.05.84 Bulletin 84/21**

(45) Publication of the grant of the patent:
**24.06.87 Bulletin 87/26**

(84) Designated Contracting States:
**AT BE CH DE FR GB IT LI NL SE**

(56) References cited:
**EP-A-0 000 851**
**DE-A-2 906 177**
**FR-A-2 413 270**
**NL-A-7 810 938**

(73) Proprietor: **Intermate B.V.**
**Jacob Marisstraat 2**
**NL-5753 DB Deurne (NL)**

(72) Inventor: **Frankefort, Arnoldus C. W. M.**
**Minister Charles Ruysstraat 11**
**NL-5802 BC Venray (NL)**

(74) Representative: **den Boer, Jan Johannes, Ir.**
**et al**
**Octrooibureau Polak & Charlouis Laan Copes**
**van Cattenburch 80**
**NL-2585 GD The Hague (NL)**

## Description

The invention relates to an apparatus for guiding a tube made from flexible material, particularly for opening up and transporting a flattened plastic tube, which has been wound to a roll, said apparatus comprising a spreading mandrel, the surface of which is formed at a plurality of peripheral positions by the most outwardly situated portion, as seen relative to the mandrel axis, of a plurality of rollers which are rotatably journalled on a shaft perpendicular to the mandrel axis, the mandrel extending into the interspace between at least two facing support rollers which are drivable around shafts which are journalled perpendicular to the mandrel axis, the rollers carried by the spreading mandrel being adapted to engage with said support rollers, the apparatus further comprising a cutting device for cutting a tube portion, which has been opened up.

Such an apparatus is known from the Dutch patent application NL—A—7810938, laid open for public inspection on May 7, 1980. Therewith article products may be provided with a shrinkable wrapping.

The invention aims at considerably increasing the wrapping velocity of the known apparatus. In the above mentioned known apparatus the driving rollers perform the supplying and opening up of the tube as well as the transporting of the portion cut from the tube to around the product. The velocity of the driving rollers has a maximum limit in connection with the strength of the tube material as opposed by the resistance of the dewinding from the supply roll and sliding the tube material along the initial portion of the mandrel when the tube is spread. Moreover, the product has to be substantially at stand-still below the mandrel when the tube portion to be cut is slid around the product and during the cutting thereof.

The purpose aimed at by the invention is achieved in that the mandrel is provided at its discharge end, beyond the cutting device provided at that position, with a projection; with driving rollers likewise journalled on shafts which are perpendicular to the mandrel axis, for driving the cut tube portion, which rollers are drivable independently of said support rollers and therefore at much higher speed than the support rollers at a selectively chosen moment and which are in engagement with or adapted to be pressed into engagement with the surface of the projection.

Due to the separation obtained herewith between supplying the tube material onto the mandrel and sliding the cut tube portion around the product, the driving rollers for this cut portion may be driven at greater velocity so that sliding the cut tube portion onto the product can take place in much shorter time than the supplying thereof. The product need be at stand-still only a short time, i.e. the transport velocity and therefore the wrapping velocity thereof may be increased. If products have to be wrapped which taper upwardly, e.g. bottles, it is even possible, due to the larger sliding velocity of the tube wrapping, to move the products continuously below the mandrel.

It is to be noted that from EP—A—000851 apparatus is known for guiding a tube made from flexible material, particularly for opening up and transporting a flattened plastic tube, which has been wound to a roll, said apparatus comprising a spreading mandrel, which extends into the interspace between at least two facing support rollers, which are drivable around shafts which are journalled perpendicular to the mandrel axis, the apparatus further comprising a cutting device for cutting a tube portion which has been opened up, the mandrel extending towards its discharge end beyond the cutting device; driving rollers for the cut tube portion being provided also beyond the cutting device and adapted to engage a cut tube portion, said driving rollers being likewise journalled on shafts which are perpendicular to the mandrel axis.

However, the speed by which the cut tube portions may be driven out of this apparatus and to the products is directly related to the speed whereby the tube material is supplied to the apparatus.

Preferably the driving rollers for the cut tube portion are drivable in continuous rotation, in which case they are adapted to be lifted from the mandrel projection. Thereby there are no losses in time due to the starting of the driving rollers such as with intermittent driven rollers. The rollers have to be lifted from the projection after a tube portion has been discharged in order to permit cutting a next tube portion.

It is also possible to suspend the projection as a pendulum on the mandrel itself. Thereby the projection is adapted to perform a slight swinging motion, whereby small deviations of the product position, namely not exactly co-axial with the mandrel, are acceptable. It will be clear that in that case the driving rollers for the cut tube portion must be adapted to likewise carry out said swinging movement. In this embodiment also non-conical products are permitted to be supplied continuously.

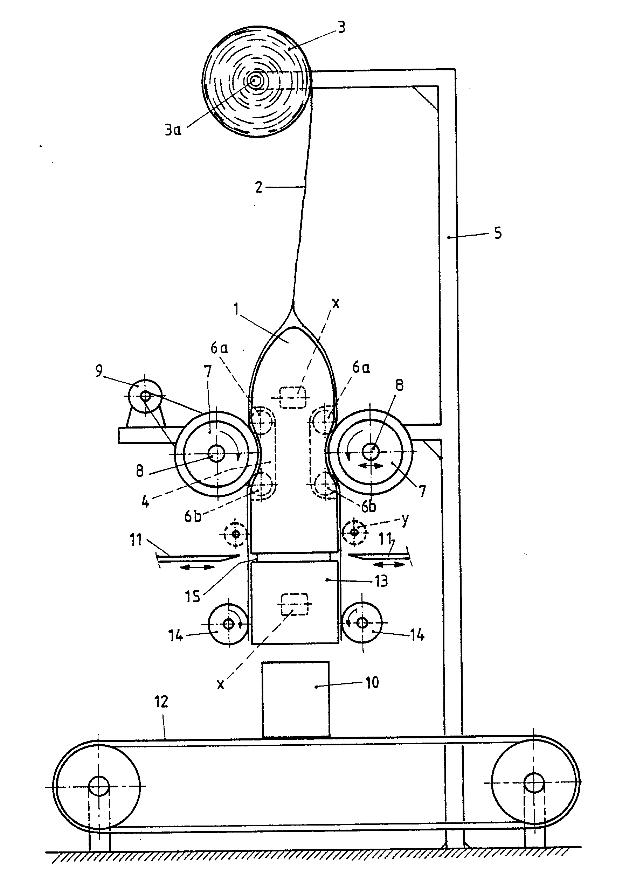

The invention will be further explained below with reference to the drawing, which shows an embodiment, given as an example, of the apparatus according to the invention.

The figure shows a mandrel shaped body 1, e.g. manufactured from plastic material, which serves for spreading the walls of a flattened tube 2 made from plastic foil, which has been wound to a supply roll 3, which is rotatably journalled around a shaft 3a in a frame 5. The mandrel 1 comprises recesses 4 at two diametrically facing positions, in each of which, in the embodiment shown, two rollers 6a, 6b are rotatably journalled around parallel shafts which extend perpendicular to the axis of the mandrel 1.

The mandrel 1 is vertically suspended in the interspace between two support rollers 7, which are rotatably journalled around shafts 8 in the frame 5. The shafts 8 extend mutually parallel and are contained in a common horizontal plane. The mandrel 1 rests with the upper rollers 6a on the support rollers 7. Thereto the interspace between the support rollers 7 has been chosen somewhat smaller than the spacing between the outer portions of the upper rollers 6a.

The lower rollers 6b are optional, but if provided, serve as auxiliary support rollers. They are in engagement with the support rollers 7 below the plane containing the shafts 8 and prevent undesirable swinging movements of the mandrel between the support rollers 7. Instead of the rollers 6b also auxiliary support rollers x and/or y, carried by the frame 5, may be provided (as indicated with dot-dash lines) in order to provide the necessary stability for the mandrel. Said auxiliary support rollers x, y may be spring biased against the mandrel surface.

The tube 2 to be spread may be slid with its downwardly extending end onto the upper end of the mandrel 1 until said end has arrived between the support rollers 7 and the rollers 6. If the support rollers 7 are driven in the direction of the arrow, e.g. through the intermediary of an electromotor 9, the tube is pulled downwardly along the mandrel, while the crosssectional shape of the tube is adapted to that of the mandrel.

So far the described apparatus is equal to that according to the above mentioned Dutch Patent application.

According to the invention the mandrel 1 has been extended beyond the optional rollers y with a projection 13, the height of which, i.e. its length in the direction of the mandrel axis, is substantially equal to the height of the objects to be wrapped. In the embodiment shown the projection 13 has been secured to the mandrel 1.

Adjacent to the lower end of the projection a pair of driving rollers 14 have been provided in diametrically opposed positions. Said rollers 14 are drivable in a manner not further shown, which will be explained below.

Between the lower end of the mandrel 1 proper and the upper end of the projection 13 a groove 15 has been provided, at the same height as whereby two horizontal cutting knives 11 have been provided outside the mandrel, which knives are horizontally reprocatingly movable according to the arrows shown in the drawing.

Below the apparatus a conveyor belt 12 which supports an object 10 is shown.

The apparatus as shown operates as follows:
When the support rollers 7 are driven, a portion of the tube 2 is spread and carried with its open end towards the position of the rollers 14. Thereafter the knives 11 are actuated and the portion of the tube, which is present on the projection 13, is cut. Thereafter the rollers 14 rotatingly engage this tube portion, which is moved downwardly and slid on the object 10 which then is at the corresponding position. The conveyor belt moves intermittenly the objects provided with a wrapping towards one end of the said belt from which they may be transferred to a shrinking device which under the influence of heat shrinks the tubular wrap around the object to a shrink foil wrap.

As soon as the knives 11 have cut the lower tube portion the rollers 7 may again start supplying a following tube portion. In the mean time the conveyor belt 12 moves an object 10 to the correct position coaxial with the mandrel axis. Thereafter the rollers 14 are actuated which are permitted to rotate with a much larger velocity than the rollers 7, because they are not resisted by the supply roll 3 and by the spreading of the tube, as are the driving rollers 7. No excessive forces are imparted to the tube portion as a result of the larger velocity of the rollers 14.

It is possible to drive the rollers 14 continuously and to journal their shafts e.g. in pivotable arms (which are not shown), which only pivot the rollers 14 towards the projection 13 if an object 10 has been positioned coaxial with the mandrel.

It is also possible to journal the rollers 14 in stationary position and to drive them only if an object is situated coaxial with the mandrel.

Auxiliary support rollers x may be provided in like manner as the support rollers 6 at the upper end of the mandrel, for stability of the mandrel projection. However, it is also possible to realize the mandrel projection as a separate part relative to the mandrel 2 and to suspend it from the mandrel 1 in swingable position.

During the time that a tube portion is slid onto the mandrel 1 and during the operation time of the cutting knives 11 a product need not yet be situated coaxial with the mandrel but may be supplied during that time period by the conveyor belt 12. Only after the operation of the knives 11 and the cutting of the tubular wrap around the mandrel projection 13, the product has to be coaxial with the mandrel, since then the rollers 14 slide the tubular wrap with great velocity onto the product.

During the following discharge of the wrapped product the supply of a new tube portion to the mandrel may take place. In the meantime a further product is supplied below the mandrel. Thereby a product need be at a standstill below the mandrel only during a shorter time than with the known apparatus. The average conveying velocity of the products has become larger. The wrapping velocity thereby may increase with a factor 2 to 5, relative to the known situation.

With products which are somewhat tapered upwardly it is even possible to move the conveyor belt 12 continuously so that the product is not actually at standstill below the mandrel. Due to the large driving velocity of the rollers 14 that tubular wrap may yet be slid onto the product. This is also permitted with non-tapering products if the mandrel projection 13 is swingably suspended as described above.

## Claims

1. Apparatus for guiding a tube (2) made from flexible material, particularly for opening up and transporting a flattened plastic tube, which has been wound to a roll (3), said apparatus comprising a spreading mandrel (1), the surface of which is formed at a plurality of peripheral positions by the most outwardly situated portion, as seen relative to the mandrel axis, of a plurality of rollers (6a) which are rotatably journalled on a shaft perpendicular to the mandrel axis, the mandrel extending into the interspace between at least two facing support rollers (7) which are drivable around shafts (8) which are journalled perpendicular to the mandrel axis, the rollers (6a) carried by the spreading mandrel (1) being adapted to engage with said support rollers (7), the apparatus further comprising a cutting device (11) for cutting a tube portion, which has been opened up, characterized in that the mandrel (1) is provided at its discharge end, beyond the cutting device (11) provided at that position, with a projection (13); with driving rollers (14) likewise journalled on shafts which are perpendicular to the mandrel axis, for driving the cut tube portion, which rollers (14) are drivable independently of said support rollers (7) and therefore at much higher speed that the support rollers (7) at a selectively chosen moment and which are in engagement with or adapted to be pressed into engagement with the surface of the projection.

2. Apparatus according to claim 1, characterized in that the driving rollers (14) for the cut tube portion are drivable in continuous rotation, the rollers being adapted to be lifted from the mandrel projection (13).

3. Apparatus according to claim 1, characterized in that the projection (13) is suspended as a pendulum from the mandrel (1), the driving rollers (14) for the cut tube portion being likewise pivotably mounted.

**Patentansprüche**

1. Vorrichtung zur Führung eines aus biegsamen Werkstoff hergestellten Schlauches (2), insbesondere zum Öffnen und Fordern eines flachgedrückten Schlauches aus Kunststoff, welcher zu einer Rolle (3) aufgewickelt ist, welche Vorrichtung besteht auds einem Spreizdorn (1) dessen Oberfläche in einer Anzahl von Umfangspunkten, vom am meisten aussenliegenden Teil einer Anzahl von Rollen (6a) gebildet wird, in Bezug auf die Dornachse betrachtet, welche Rollen rotiebar um eine senkrecht zur Dornachse verflaufenden Welle gelagert sind, wobei der Dorn in den Zwischenraum zwischen wenigstens zwei gegenübereinanderliegenden Stützrollen (7) hinein ragt, welche Rollen um Wellen (8) antreibbar sind, welche senkrecht zur Dornachse gelagert sind, welche Rollen (6a) vom Spreizdorn (1) getragen werden und mit jenen Strützrollen (7) in Eingriff bringbar sind, welche Vorrichtung weiter mit einer Schneidvorrichtung (11) zum Abschneiden eines geöffneten Schlauchteils versehen ist, dadurch gekennzeichnet, dass der Dorn (1) an seinem Abfuhrende vorbei der an dieser Stelle vorgesehenen Schneidvorrichtung (11) mit einer Verlängerung (13) versehen ist; während ebenfalls auf senkrecht zur Dornachse stehenden Wellen gelagerten Antriebsrollen (14) zum Antreiben des abgeschnittenen Schlauchteils vorgesehen sind. welche Rollen (14) unabhängig als die Strützrollen (7) und dadurch mit viel höherer Geschwindigkeit als die Strützrollen (7) in einem gewählten Augenblick antreibbar sind, und welche Rollen mit der Oberfläche der Verflängerung im Eingriff sind oder mit dieser Oberfläche in Eingriff druckbar sind.

2. Vorrichtung nach Anspruch 1, dadurch gekennzeichnet, dass die Antriebstollen (14) zum antreiben des abgeschnittenen Schlauchteils kontinuierlich rotierend antreibbar sind, wobei die Rollen vom Dornverlängerung (13) abhebbar sind.

3. Vorrichtung nach Anspruch 1, dadurch gekennzeichnet, dass die Verlängerung (13) wie eine Schwinge am Dorm (1) aufgehängt ist, während die Antreiben Schlauchteils ebenfalls schwenkbar angeordnet sind.

**Revendications**

1. Dispositif pour le guidage d'un tube (2) en matière flexible en particulier pour ouvrir et transporter un tube en matière synthetique aplati enroulé en forme de rouleau (3), ledit dispositif comprenant un mandrin (1) dilatateur dont la surface est constituée en un nombre de points périphériques par la partie la plus extérieure d'un nombre de rouleaux (6a), comme vue par rapport à l'axe du mandrin, lesdits rouleaux étant supportés par un arbre perpendiculaire à l'axe du mandrin, le mandrin s'étendant dans l'espace intermédiaire entre au moins deux rouleaux (7) de support opposés, étant entraînables autour des aubres (8) supportés perpendiculairement à l'axe du mandrin, les rouleaux (6a) portés par le mandrin (1) dilatateur étant arrangès à engager les rouleaux (7) de support, le dispositif de plus cpmprenant un appareil (11) à couper une partie de tube qui a été dilatée, caractérisé en ce que le mandrin (1) est prévu à son extrémité de décharge, en dehors de l'appareil (11) à couper prévu à cette position, d'un appendice (13) à des rouleaux (14) entraîneurs également supportés par des arbres étant perpendiculaires à l'axe du mandrin, pour entraîner la partie de tube coupée, lesdits rouleaux (14) étant entraînables indépendemmant desdits rouleaux (7) de support et par conséquent à une vitesse beaucoup plus grande que les rouleaux (7) de support, à un moment sélecté et qui sont en engagement avec la surface de l'appendice ou qui sont arrangés à être poussés en engagement avec la surface de l'appendice.

2. Dispositif selon la revendication 1, caractérisé en ce que les rouleaux (14) entraîneurs de la partie de tube coupé ont été arrangés à être en rotation de façon continue, lesdits rouleaux étant arrangés à être enlevés dudit appendice (13) du mandrin.

3. Dispositif selon la revendication 1, caractérisé en ce que l'appendice (13) a été suspendu du mandrin (1) de façon pivotante, les rouleaux (14) entraîneurs de la partie de tube coupée étant également montés de façon pivotante.